# EUROPÄISCHE PATENTSCHRIFT

(11) **EP 3 710 164 B1**
(45) Veröffentlichungstag und Bekanntmachung des Hinweises auf die Patenterteilung: **09.02.2022**
(21) Anmeldenummer: 18810877.3
(22) Anmeldetag: 06.11.2018
(51) Int. Cl.: B01L 3/00, B29C 45/16

(54) **SENSORKASSETTE**
SENSOR CASSETTE
CASSETTE DE DÉTECTION

(30) Priorität: 10.11.2017 AT 4392017
(43) Veröffentlichungstag der Anmeldung: 23.09.2020
(73) Patentinhaber: ERBA Technologies Austria GmbH, 8020 Graz (AT)
(72) Erfinder: FELSBERGER, Robert, 8020 Graz (AT); SCHLEMBACHER, Gerhard, 8152 Stallhofen (AT); HACKL, Martin, 8054 Graz (AT); REIF, Sebastian, 8062 Kumberg (AT); SIEBER, Arne, 8041 Graz (AT); WERKL, Dietmar, 8010 Graz (AT)
(74) Vertreter: Keschmann, Marc
(86) Internationale Anmeldenummer: PCT/AT2018/000089
(87) Internationale Veröffentlichungsnummer: WO 2019/090370

(56) Entgegenhaltungen:
- EP-A1- 1 905 514
- EP-A2- 1 525 918
- WO-A1-2004/024326
- WO-A1-2009/024589
- US-A1- 2006 000 722
- US-A1- 2017 120 240

## Beschreibung

Die Erfindung betrifft eine in ein Analysemodul einsetzbare Sensorkassette zur Durchführung von insbesondere elektrochemischen Messvorgängen in Probenflüssigkeiten, insbesondere Körperflüssigkeiten oder durch präanalytische Aufbereitung von Körperflüssigkeiten oder biologischem Probenmaterial gewonnenen Probenflüssigkeiten, umfassend einen Sensorträger, der im wesentlichen planar ausgebildet ist und eine Mehrzahl von insbesondere elektrochemischen Sensorelementen zur Bestimmung von chemischen und/oder physikalischen Parametern der Probenflüssigkeiten trägt, die mit am Sensorträger ausgebildeten Leiterbahnen in Verbindung stehen, und einen auf dem Sensorträger angeordneten Abdeckteil, in dem wenigstens ein zum Sensorträger hin offener nutförmiger Messkanal ausgebildet ist, der für den Durchfluss der Probenflüssigkeit bestimmt ist, mit wenigstens einem insbesondere elektrochemischen Sensorelement des Sensorträgers in Verbindung steht und mit wenigstens einem an der dem Sensorträger abgewandten Seite angeordneten Flüssigkeitsanschluss fluidisch verbunden ist.

Die Erfindung betrifft weiter eine Vorrichtung zur Durchführung von insbesondere elektrochemischen Messvorgängen in Probenflüssigkeiten umfassend eine erfindungsgemäße Sensorkassette und ein Analysemodul mit wenigstens einer Kassettenaufnahme für die Sensorkassette, wobei die Sensorkassette im in der Kassettenaufnahme aufgenommenen Zustand entlang einer Bewegungsbahn zwischen einer ersten und einer zweiten Position verlagerbar ist, wobei die Sensorkassette in der ersten Position von dem Analysemodul fluidisch und elektrisch getrennt und in der zweiten Position fluidisch und elektrisch mit dem Analysemodul verbunden ist.

Das Dokument WO 2009/024589 A1 offenbart einen Durchflusssensor umfassend einen Grundkörper mit einem Durchflusskanal, ein an den Durchflusskanal angrenzendes Durchflusssensorelement, und eine auf dem Grundkörper angeordnete, den Durchflusskanal abdeckende Deckplatte, wobei der Durchflusskanal durch eine Dichtungslippe gebildet wird, welche den Durchflusskanal auf einer der Deckplatte gegenüberliegenden Oberseite des Grundkörpers umlaufend begrenzt und dichtend an die Deckplatte angepresst ist.

Messsysteme zur Bestimmung mehrerer Parameter in Körperflüssigkeiten stellen wichtige Bestandteile klinisch relevanter Analyseverfahren dar. Hierbei steht insbesondere eine schnelle und präzise Messung sowohl im Rahmen der klinischen in-vitro Labordiagnostik als auch eines Pointof-Care-Testings im Vordergrund. Unter dem Point-of-Care-Testing (kurz: POCT) versteht man diagnostische Untersuchungen, die unmittelbar am Ort der Patientenuntersuchung stattfinden, wie z.B. in der Krankenstation eines Krankenhauses, in Intensivstationen, in der Anästhesie, in Ambulanzen, in der Praxis eines niedergelassenen Arztes oder während eines Krankentransports. POCT hat den Vorteil, dass die Ergebnisse bereits nach kurzer Zeit vorliegen, da zum einen der Transport der Proben zu einem spezialisierten Labor entfällt und zum anderen keine Rücksicht auf die zeitlichen Abläufe des Labors genommen werden muss.

Mit POCT-Analysegeräten gemäß dem Stand der Technik ist es möglich, im Rahmen eines einzigen Messvorgangs mehrere Einzelparameter zu messen. Zu diesem Zweck wird eine Probemenge der zu untersuchenden Probenflüssigkeit, insbesondere Vollblut, Serum, Plasma, Urin oder einer durch präanalytische Aufbereitung von Körperflüssigkeiten oder biologischem Probenmaterial gewonnenen Probenflüssigkeit, einem Messkanal zugeführt, in welchem die Probenmenge mit Sensorelementen in Kontakt kommt. Dabei können mehrere unterschiedliche Sensorelemente zu Gruppen von Sensorelementen (Sensorarrays) zusammengefasst werden, welche auf einem gemeinsamen Träger angeordnet sind.

Unter einem Sensorelement wird hierbei eine Messanordnung verstanden, die der Bestimmung von chemischen und/oder physikalischen Parametern der Probenflüssigkeiten dienen kann. Dabei können verschiedenste Messverfahren zur Anwendung gelangen, wie z.B. elektrochemische, optische, photometrische/spektroskopische oder elektrooptische Messverfahren (wie z.B. Elektrochemilumineszenz), wobei entsprechende sensorische Elemente, wie z.B. Elektroden, Optoden oder dgl. eingesetzt werden. Im Rahmen der Erfindung sind elektrochemisch arbeitende Sensorelemente besonders bevorzugt. Die Sensorelemente können ausgebildet sein, um Werte der Blutgase (O₂, CO₂), den pH-Wert, die Konzentration von Elektrolyten (Li⁺, Na⁺, K⁺, Mg⁺⁺, Ca⁺⁺, Cl⁻, H⁺, NH₄⁺), die Konzentration von Metaboliten (Glukose, Laktat, Harnstoff, Creatinin), die Werte der Hämoglobinderivate (O₂Hb (Oxyhämoglobin), HHb (Desoxyhämoglobin), COHb (Carboxyhämoglobin), MetHb (Methämoglobin)) und Bilirubin, den Hämatokritwert, Nierenfunktionswerte, Blutgerinnungswerte, Marker für kardiale Erkrankungen, Proteine, Nukleinsäuren, Peptide und andere Messwerte zu ermitteln.

Für die elektrochemische Ermittlung der Konzentration bzw. Aktivität eines in der zu untersuchenden Probenflüssigkeit gelösten Ions bzw. Elektrolyts werden seit langem ionenselektive Elektroden eingesetzt, die z.B. mittels Dünnschichttechnologie oder Dickschichttechnologie auf einem planaren Sensorträger aufgebracht sind. Zwischen der mit der zu untersuchenden Probenflüssigkeit in Kontakt stehenden ionenselektiven Elektrode und einer Referenzelektrode kann hierbei eine konzentrationsabhängige Spannung gemessen werden, wobei der Abgriff der Spannung über auf dem Sensorträger ausgebildete Leiterbahnen erfolgen kann.

Für die elektrochemische Ermittlung der Konzentration bzw. Aktivität von in der zu untersuchenden Körperflüssigkeit gelösten Blutgasen, Metaboliten sowie anderer biochemischer Parameter (wie Proteine, Nukleinsäuren, Peptide, etc.) sowie anderer Marker und Messwerte, werden seit langem auch amperometrische Sensoren oder elektrochemische Impedanzsensoren eingesetzt, die z.B. mittels Dünnschichttechnologie oder Dickschichttechnologie auf einem planaren Sensorträger aufgebracht sind. Zwischen der mit der zu untersuchenden Probenflüssigkeit in Kontakt stehenden Sensorelektrode und einer Gegenelektrode kann hierbei ein konzentrationsabhängiger Strom bzw. eine konzentrationsabhängige Impedanz gemessen werden, wobei der Abgriff der elektrochemischen Signale über auf dem Sensorträger ausgebildete Leiterbahnen erfolgen kann.

Um POCT-Anwendungen zu ermöglichen, ist es bekannt, die Sensorelemente in einer Sensorkassette zu integrieren, die austauschbar in einem Analysemodul aufgenommen ist. Die Sensorkassette umfasst dabei den Sensorträger sowie einen auf diesem angeordneten Abdeckteil, in dem wenigstens ein Messkanal ausgebildet ist, welcher der Durchleitung der zu untersuchenden Probenflüssigkeit dient. Die Probenflüssigkeit kontaktiert dabei entlang des Messkanals die Sensorelemente, sodass unmittelbar entsprechende Messwerte gewonnen werden können, die im Analysemodul ausgewertet und verarbeitet werden, sodass entsprechende Ergebnisse ausgegeben werden können. Die Sensorkassette kann lediglich für eine definierte Anzahl an Messvorgängen verwendet werden und muss danach gegen eine neue Sensorkassette ausgetauscht werden.

Um eine möglichst große Anzahl an Messvorgängen und eine möglichst lange Einsatzdauer zu ermöglichen, werden hohe Anforderungen an die Sensorkassette gestellt:
- Zuverlässige Abdichtung des Messkanals
- Vermeidung von Toträumen und Spalten im Flüssigkeitsweg
- Vermeidung von Verschleppung und Kreuzkontamination zwischen unterschiedlichen Messungen
- Verhinderung der Biofilmbildung an den mit der Flüssigkeit in Kontakt kommenden Teilen

Die vorliegende Erfindung zielt darauf ab, eine Sensorkassette sowie eine Messvorrichtung umfassend eine Sensorkassette und ein Analysemodul dahingehend weiterzubilden, dass den oben genannten Anforderungen entsprochen werden kann. Weiters zielt die Erfindung darauf ab, eine möglichst kostengünstige und automatisierte Herstellung der Sensorkassette zu ermöglichen.

Zur Lösung dieser Aufgabe besteht die Erfindung bei einer Sensorkassette der eingangs genannten Art im Wesentlichen darin, dass der Abdeckteil als Zweikomponenten-Spritzgussteil umfassend eine Hartkomponente und eine Weichkomponente ausgeführt ist, wobei der wenigstens eine Messkanal über seine gesamte Länge in der Weichkomponente ausgebildet ist. Dadurch, dass der wenigstens eine Messkanal zur Gänze in der Weichkomponente eines Zweikomponenten-Spritzgussteils ausgeführt ist, kann dieser einteilig ausgebildet werden, sodass Toträume und Spalten sowie Verschleppung und Kreuzkontamination zwischen unterschiedlichen Messungen in einfacher Weise vermieden werden. Außerdem kann der Abdeckteil in einem einzigen Fertigungsprozess, nämlich durch einen Zweikomponenten-Spritzgussvorgang, in einem Stück hergestellt werden, sodass eine kostengünstige Herstellung mit kurzen Taktzeiten unter Verwendung erprobter Werkzeuge und Werkstoffe sichergestellt ist. Im Falle der Anordnung von zwei oder mehr Messkanälen können diese, sofern die Messkanalgeometrie so gewählt ist, dass die Messkanäle miteinander verbunden sind oder ineinander münden, in vorteilhafter Weise ebenfalls einstückig miteinander ausgebildet sein.

Die Ausbildung des Messkanals als Weichkomponente eines Zweikomponenten-Spritzgussteils erlaubt es weiters, auch die Abdichtung des wenigstens einen Messkanals gegenüber dem Sensorträger in einem Stück mit dem Messkanal auszubilden. Eine bevorzugte Ausbildung sieht in diesem Zusammenhang vor, dass die Weichkomponente mit dem Sensorträger zusammenwirkende Dichtlippen zur Abdichtung des wenigstens einen Messkanals aufweist. Die Dichtlippen sind dabei vorzugsweise als eine den wenigstens einen Messkanal vollständig umlaufende Struktur ausgebildet, sodass eine allseitige Abdichtung gewährleistet ist. Die Dichtlippen sind vorzugsweise derart ausgebildet, dass sie im unverformten Zustand von der dem Sensorträger zugewandten Fläche des Abdeckteils vorstehen. Die Dichtlippen weisen beispielsweise ein V-förmiges Profil auf, wobei bevorzugt ein Profil mit zwei nebeneinander liegenden Erhebungen, insbesondere ein W-förmiges Profil, vorgesehen ist. Die Dichtlippe wird im an den Sensorträger angepressten Zustand derart verformt, dass ein dichter Abschluss gewährleistet ist.

Erfindungsgemäß bildet die Weichkomponente auch den wenigstens einen Flüssigkeitsanschluss aus, der bevorzugt zur Ausbildung zumindest eines innenliegenden ringförmigen Dichtelements ausgeformt ist, wobei der wenigstens eine Messkanal und der wenigstens eine Flüssigkeitsanschluss miteinander einstückig ausgebildet sind. Dadurch sind alle Bereiche des Abdeckteils, mit denen die Probenflüssigkeit auf ihrem Weg vom Flüssigkeitseintritt über den Messkanal bis zum Flüssigkeitsaustritt in Berührung kommen, von der Weichkomponente und daher in einem einzigen Stück gebildet. Dies minimiert Materialübergänge und Interfaces, wie z.B. Spalte im Bereich der Kanäle, sowie die Anzahl der unterschiedlichen mit der Flüssigkeit in Kontakt kommenden Materialien, was einerseits die Möglichkeiten für Undichtigkeiten und andererseits mögliche Toträume und Spalte, die zu Verschmutzung, Biofilmbildung, Verschleppung

(carry over) und Kreuzkontamination zwischen unterschiedlichen Messungen führen können, verringert. Die Ausbildung eines innenliegenden ringförmigen Dichtelements bzw. eines Dichtringes im Flüssigkeitsanschluss gestattet eine bessere und dichtere Anbindung an ein entsprechendes fluidisches Verbindungselement, das an einem Analysenmodul zur Verwendung mit der erfindungsgemäßen Sensorkassette vorgesehen ist.

Unter einer Hart- und einer Weichkomponente werden im Rahmen der Erfindung im Spritzguss verarbeitbare Kunststoffe verstanden, wobei die Hart- und die Weichkomponente sich in ihrer Härte (gemessen in HR oder HV) unterscheiden, d.h. in dem mechanischen Widerstand, den die jeweilige Komponente der mechanischen Eindringung eines anderen Körpers entgegensetzt, wobei die Weichkomponente eine geringere Härte aufweist; als die Hartkomponente. Als Weichkomponente findet insbesondere ein Polymer Verwendung, das bei Raumtemperatur nachgiebig bzw. flexibel ist. Die Hartkomponente hingegen ist im Wesentlichen nicht nachgiebig bzw. nicht flexibel.

Als Kunststoff für die Hartkomponente kommen gängige thermoplastisch verarbeitbare Kunststoffe in Frage, wie z.B. PC (Polycarbonat), PS Polystyrol), PMMA (Polymethylmethacrylat), COP/COC Cycloolefin-Copolymere, PP (Polypropylen), PE (Polyethylen), PA (Polyamid) und dgl., wobei optisch transparente Kunststofftypen bevorzugt sind.

Als Kunststoff für die Weichkomponente kommen gängige, im Zweikomponenten-Spritzgussprozess verarbeitbare Weichkunststoffkomponenten bzw. Elastomere in Frage, wie z.B. thermoplastische Elastomere (TPE's), eCOC (elastomere Cycloolefin-Copolymere), Silikone, insbesondere Flüssigsiliconkautschuk (LSR), thermoplastische Polyurethan Elastomere (TPU), und dg1., wobei optisch transparente Kunststofftypen bevorzugt sind.

Gemäß einer bevorzugten Ausbildung ist in der Hartkomponente wenigstens eine Nut ausgebildet, in der die Weichkomponente zur Ausbildung des wenigstens einen Messkanals angeordnet ist. Dies verleiht dem Messkanal eine mechanische Stabilität.

Bevorzugt ist weiters vorgesehen, dass an einem. Ende der Hartkomponente ein ergonomischer Haltegriff angeformt ist, welcher zum einfachen Einführen der Sensorkassette in eine entsprechende Aufnahme des Analysenmoduls dient.

Der Sensorträger kann ebenfalls aus einer Hartkomponente gefertigt werden. Als Kunststoff für den Sensorträger kommen gängige thermoplastisch verarbeitbare Kunststoffe in Frage, wie z.B. PC. (Polycarbonat), PS (Polystyrol), PMMA (Polymethylmethacrylat), COP/COC (Cycloolefin-Copolymere), PP (Polypropylen), PE (Polyethylen), PA (Polyamid) und dg1., wobei optisch transparente Kunststofftypen bevorzugt sind. Polycarbonat ist im Rahmen der Erfindung besondere bevorzugt. Der Sensorträger kann ebenfalls in Form einer Leiterplatte in den im Bereich der Elektronik üblichen Substratmateriallen für starre oder flexible Leiterplatten (wie Faserverstärkte Epoxydharze (z.B. sog. FR4), Polyimid (PI), etc.) ausgeführt sein.

Gemäß einer bevorzugten Ausbildung sind der Sensorträger und/oder der Abdeckteil. optisch transparent ausgebildet. Die transparente Ausführung ermöglicht eine visuelle Probenbeobachtung und/oder eine Luftblasenerkennung. Die Ausführung in optisch transparentem Kunststoffmaterial bietet weiters die Möglichkeit zur simultanen Durchführung weiterer optischer Messungen an der Probe, z.B. Absorptions- bzw. Fluoreszenz-Spektroskopie oder Transmissionsmessungen im UV-Vis-NIR Bereich zur Bestimmung weiterer Parameter (z.B. Oxymetrie). Weiters bietet sich durch eine transparente Ausbildung von Sensorträger und/oder Abdeckteil die Möglichkeit zur Nutzung kombinierter elektrochemisch/optischer Detektionsmethoden (wie z.B. Elektrochemilumineszenz.

Alternativ kann die Probenbeobachtung, insbesondere die Beobachtung der Probenpositionierung im Messkanal und ggf. die Detektion von Luftblasen durch eine Leitwert- oder Impedanzmessung mittels auf den Sensorträger aufgebrachter gesonderter Elektroden vorgenommen werden.

Die Verbindung des Abdeckteils mit dem Sensorträger kann auf unterschiedliche Art und Weise erfolgen, wobei die Verbindung bevorzugt nicht zerstörungsfrei gelöst werden kann. Eine weitere Anforderung liegt darin, dass eine möglichst präzise gegenseitige Ausrichtung von Sensorträger und Abdeckteil gewährleistet sein soll. Die Verbindung zwischen Sensorträger und dem Abdeckteil kann, durch gängige Verfahren, wie z.B. Verkleben, Verschweißen (z.B. thermisch, mittels Ultraschall, mittels Laser), durch Einrastelemente, etc. erfolgen, Eine bevorzugte Ausbildung sieht in diesem Zusammenhang vor, dass der Sensorträger und der Abdeckteil formschlüssig miteinander zusammenwirkende Verbindungselemente aufweisen. Der Formschluss kann beispielsweise dadurch erfolgen, dass der Sensorträger oder der Abdeckteil wenigstens zwei vorragende Stifte, Zapfen, Dorne oder dgl. trägt, die in entsprechende Ausnehmunghen des anderen Teils eingreifen.

Der Formschluss ermöglicht eine automatisierte und sehr exakte, zentrierte Positionierung des wenigstens einen Messkanals über den Sensorelementen. Dadurch kann neben Kosteneinsparungen in der Fertigung die Größe der Sensorelemente optimal an die Breite des Messkanals angepasst werden, ohne dass die Gefahr einer teilweisen Überdeckung oder Quetschung der Sensorelemente durch den Abdeckteil oder die Dichtlippen besteht. Dies ermöglicht u.a. den Mehrfach- und Langzeiteinsatz der Sensorkassette mit bis zu 700 Probenmessungen bzw. bis zu 8 Wochen Einsatzdauer.

Eine besonders bevorzugte Ausbildung der Verbindung zwischen dem Sensorträger und dem Abdeckteil gelingt dadurch, dass die Verbindungselemente durch Verstemmen in formschlüssige Verbindung gebracht sind. Das Verstemmen kann hierbei als Kalt- oder als Heißverstemmen vorgenommen wenden. Die Verbindung wird hierbei so hergestellt, dass Teile der Weichkomponente des Abdeckteils gegen den Sensorträger gedrückt und dadurch komprimiert werden, wodurch der wenigstens eine Messkanal abgedichtet wird.

Die Verstemmelemente umfassen bevorzugt am Sensorträger oder am Abdeckteil angeordnete Dome, die am jeweils anderen Teil ausgebildete Ausnehmungen durchsetzen. Diese Ausnehmungen können in Form einfacher Bohrungen, ausgeführt sein oder können optional auch erweiterte Bereiche aufweisen, in denen das durch die plastische Verformung verdrängte Material des Verstemmdoms aufgenommen wird. Das Verstemmen ermöglicht eine sichere, dichte und dauerhafte Verbindung des. Sensorträgers mit dem Abdeckteil. Dieser Fügeprozess ist sehr gut automatisierbar hat sehr kurze Zykluszeiten und ist deutlich prozessicherer und langlebiger als z.B. Klebeverfahren. Ein weiterer Vorteil liegt darin, dass die Sensorkassette nicht, zerstörungsfrei lösbar bzw. zerlegbar ist. Weiters besteht außerhalb des Bereichs der Verstemmelemente insbesondere der Verstemmdome und -nuten keine Beeinträchtigung der Transparenz der Kunststoffteile durch z.B. Kleberschlieren Schweißwülste, etc. Die Wärmeeinwirkungszone beim Verfügen kann auf einen engen Bereich um die Verstemmdome begrenzt werden und so eine thermische Belastung der ggf. temperaturempfindlichen aktiven Sensorflächen vermieden werden.

Die auf dem Sensorträger angeordneten Sensorelemente sind bevorzugt als elektrochemische Sensorelemente mit einer ionenselektiven Elektrode, einer Sensorelektrode für amperometrische oder Impedanzmessungen ausgebildet. Bevorzugt sind diese Sensorelemente in DickschichtTechnologie auf den Sensorträger aufgebracht, insbesondere aufgedruckt. Insbesondere umfasst der Sensorträger eine Anordnung von mehreren ionenselektiven amperometrischen oder impedanzbasierten Sensorelektroden zur simultanen Messung mehrerer Ionenspezies, Blutgasparameter, Metabolite, Biomoleküle oder Marker in Form eines Sensorarrays und mindestens eine Referenzelektrode sowie gegebenenfalls eine Gegenelektrode. Ionenselektive elektrochemische Sensortypen auf Dickschichtbasis für die hier verwendeten Messparameter (z. B. Na+ ,K+, Ca++, Cl-, H+, Li+, NH4+, Mg++, etc.) basieren auf dem in der Literatur bekannten schichtweisen Aufbau aus Elektrodenableitung, ggf. weiteren elektrochemisch aktiven Materialien wie z.B. Festkontaktmaterialien, Ionen-Elektronen Transduktoren, Mediatoren, und mittels Ionophoren, Ionentauschern bzw. LeitSalzen dotierten. Sensormembranen.

Amperometrische elektrochemische Sensortypen für Blutgase, Metabolite, und Biomoleküle basieren, auf dem in der Literatur bekannten schichtweisen Aufbau aus Elektrodenableitung, ggf. weiteren elektrochemisch aktiven Materialien wie Festkontaktmaterialen, Transduktoren, Mediatoren, Enzymen, Rezeptormolekülen, Deckmembranen etc.

Impedanzbasierte Sensortypen für Biomoleküle und weitere chemisch-physikalische Probenparameter basieren auf dem in der Literatur bekannten schichtweisen Aufbau aus Elektrodenableitung und ggf. weiteren Modifikationen und/oder spezifischen Beschichtungen der Elektrodenoberfläche mit z.B. Rezeptormolekülen.

Bevorzugt ist vorgesehen, dass zusätzlich zu dem wenigstens einen Messkanal ein Referenzkanal im Abdeckteil ausgebildet ist, wobei der Messkanal an einem Ende mit einem für den Zufluss der Probenflüssigkeit vorgesehenen ersten Flüssigkeitsanschluss und am anderen Ende mit einem für den Abfluss der Probenflüssigkeit vorgesehenen zweiten Flüssigkeitsanschluss in Verbindung steht und wobei der Referenzkanal an einem Ende mit einem für den Zufluss einer Referenzflüssigkeit vorgesehenen dritten Flüssigkeitsanschluss in Verbindung steht und am anderen Ende in den Messkanal mündet. Der Referenzkanal steht hierbei mit einer Referenzelektrode in Verbindung, wobei die Referenzelektrode mit einer Leiterbahn elektrisch verbunden ist, die im Hinblick auf die Messung einer Spannung zwischen der Referenzelektrode und einer ionenselektiven Elektrode dem Spannungsabgriff dient. Dadurch, dass die Referenzelektrode in den Messkanal mündet., vermischt sich die Referenzlösung mit der bereits untersuchten Probenflüssigkeit und der Abfluss dieser Mischung kann über einen einzigen Flüssigkeitsanschluss erfolgen, wodurch ein platzsparender Aufbau gewährleistet ist.

Bevorzugt ist hierbei weiters vorgesehen, dass der Referenzkanal in einen abgewinkelten: Abschnitt des Messkanals mündet. Der Referenzkanal trifft im abgewinkelten Abschnitt des Messkanals somit in Form. ähnlich eines Y auf diesen auf, um den gesamten Platzbedarf des Kanalsystems und die Gesamtfläche der Sensorkassette zu minimieren.

Eine weitere bevorzugte Ausführungsvariante basiert auf der Verwendung wenigstens einer Referenzelektrode, welche direkt im Messkanal angeordnet ist und welche keine separate Referenzflüssigkeit bzw. separaten Referenzkanal benötigt. Solche Referenzelektroden basieren z.B. auf dem in der Literatur bekannten Elektrodenaufbau aus einer Metall/Metallsals - Kombination ggf. in Verbindung mit einein Salzreservoir, welches in einem Gel oder einer quellbaren Polymermatrix auf der Elektrodenfläche aufgebracht ist.

Gemäß einem weiteren Aspekt wird durch die Erfindung eine Vorrichtung zur Durchführung von insbesondere elektrochemischen Messvorgängen in Probenflüssigkeiten geschaffen, umfassend eine erfindungsgemäße Sensorkassette und ein Analysemodul mit wenigstens einer Kassettenaufnahme für die Sensorkassette, wobei die: Sensorkassette im in der Kassettenaufnahme aufgenommenen Zustand entlang einer Bewegungsbahn zwischen einer ersten und einer zweiten Position verlagerbar: ist, wobei die Sensorkassette in der ersten Position von dem Analysemodul fluidisch und elektrisch getrennt und in der zweiten Position fluidisch und elektrisch mit dem Analysemodul verbunden ist. Durch das Vorsehen einer Kassettenaufnahme kann die Sensorkassette zuerst in die Aufnahme eingelegt oder eingeschoben werden und dann in eine Position verlagert werden, in welcher die fluidische und elektrische Verbindung bzw. Kontaktierung der Sensorkassette mit dem Analysemodul erfolgt. Die dadurch erreichte Trennung der Einlege- bzw. Einschubbewegung von der zu der Kontaktierung führenden Bewegung der Sensorkassette stellt sicher, dass die Kontaktierung am Ende einer definierten Bewegungsbahn und daher unter definierten Verhältnissen erfolgt, bei der die Sensorkassette von der ersten in die zweite Position verlagert wird.

Im Zusammenhang mit der fluidischen und elektrischen Kontaktierung der Sensorkassette sieht, eine bevorzugte Ausbildung vor, dass das Analysemodul wenigstens ein, bevorzugt federnd gelagertes, fluidisches Verbindungselement aufweist, das mit dem wenigstens einen als Gegenelement ausgebildeten Flüssigkeitsanschluss der Sensorkassette in fluidische Verbindung bringbar ist und dass das Analysemodul eine Mehrzahl von elektrischen Kontaktelementen aufweist, die mit von dem Abdeckteil freigelassenen Kontaktbereichen der Leiterbahnen der Sensorkassette in elektrische Verbindung bringbar sind. Insbesondere kann der im Zweikomponenten-Spritzguss-Abdeckteil ausgebildete und durch die Weichkomponente realisierte Flüssigkeitsanschluss in Form einer Zentrierdichtung für die Sicherstellung einer sicheren und dichten Verbindung mit den entsprechend einfach ausgeführten Verbindungselementen auf der Seite des Analysemoduls ausgeführt sein. Durch die bevorzugt vorgesehene federnde Lagerung des zumindest einen Verbindungselements kann das zumindest eine fluidische Verbindungselement eine von der genauen Lage der Sensorkassette unabhängige und weitgehend konstante Anpresskraft auf den Flüssigkeitsanschluss der Sensorkassette ausüben. Hierdurch können geringfügige Lageabweichungen der Sensorkassette und/oder Fertigungstoleranzen der Sensorkassette ausgeglichen werden.

Besonders bevorzugt ist vorgesehen, dass die fluidische und die elektrische Verbindung durch die Verlagerung der Sensorkassette entlang der Bewegungsbahn herstellbar ist. Dies bedeutet beispielsweise, dass das Ineinandergreifen des wenigstens einen Flüssigkeitsanschlusses der Sensorkassette in das fluidische Verbindungselement des Analysemoduls durch die Bewegung entlang der Bewegungsbahn erfolgt. In Bezug auf die Herstellung der elektrischen Verbindung erfolgt dies beispielsweise dadurch, dass die elektrischen Kontaktelemente von in Richtung der Bewegung entlang der Bewegungsbahn federnd gehaltenen Kontaktstiften gebildet sind.

Wenn, wie dies ebenfalls einer bevorzugten Ausbildung entspricht, die Bewegungsbahn öder eine Bewegungskomponente derselben im Wesentlichen quer öder senkrecht zur Ebene des planaren Sensorträgers verläuft können die fluidische und die elektrische Kontaktierung an derselben Seite der im Wesentlichen planaren Sensorkassette erfolgen, d.h, an der Ober- oder an der Unterseite der Sensorkassette.

Die Dichtheit der fluidischen Verbindung kann durch die in den Flüssigkeitsanschlüssen der Sensorkassette enthaltene Dichtungs-Weichkomponente und die sichere elektrische Kontaktierung durch entsprechende am Analysemodul angebrachte Federkontakte gewährleistet werden. Diese Anordnung der fluidischen und elektrischen Anschlüsse ermöglicht eine entsprechend kompakte Bauweise und begünstigt den platzsparenden, universellen Einbau solcher Module in größere Messgeräte und Analysesysteme.

Gemäß einer bevorzugten Ausbildung wirkt die Kassettenaufnahme mit einer Lagerung oder Führung zusammen, um gemeinsam mit der darin aufgenommenen Sensorkassette entlang der Bewegungsbahn verlagert zu werden.

Insbesondere kann die Kassettenaufnahme schwenkbar gelagert sein, um die Sensorkassette entlang der Bewegungabahn von der ersten Position in die zweite Position zu verschwenken. Die fluidische und elektrische Kontaktierung der Sensorkassette erfolgen hierbei durch eine Schwenk- bzw. Kippbewegung durch Anpressen der Anschlüsse gegen das Analysemodul.

Bevorzugt weist das Analysemodul ein mit der Kassettenaufnahme zusammenwirkendes Verriegelungselement auf, um die Kassettenaufnahme in der zweiten Position der sensorkassette zu fixieren. Die Verriegelung kann hierbei durch verschiedene einfache Mechanismen, wie z.B. Kugelschnapper, Schiebedeckel und dgl. erreicht werden.

Um die für die Anpressung der Sensorkassette an die Verbindungelemente des Analysemoduls erforderlichen Kräfte aufbringen zu können, ist bevorzugt vorgesehen, dass die Kassettenaufnahme wenigstens ein Halteelement aufweist, welches einen quer zur Bewegungsbahn wirksamen Anschlag für die Sensorkassette ausbildet.

Gleichzeitig kann das wenigstens eine Halteelement eine Führung zum Einschieben der Sensorkassette in die Kassettenaufnahme quer zur Bewegungsbahn ausbilden.

Für die weitere Verarbeitung der aus der Sensorkassette gewonnenen elektrischen Signale ist bevorzugt vorgesehen, dass das Analysemodul eine elektronische Schaltung zur Verstärkung und/oder analog-digital Wandlung der über die elektrischen Kontaktelemente abgegriffenen Signale aufweist. Insbesondere ist für jede ionenselektive Elektrode der Sensorkassette eine eigene Vorverstärkerschaltung und/oder ADC-Schaltung im Analysemodul vorgesehen. Durch das Vorsehen von separaten Verstärkerschaltungen und/oder ADC Schaltungen im Analysemodul können alle Messparameter in unmittelbarer Nähe der Sensorkassette bzw, der Kassettenaufnahme simultan und mit geringen Störeinflüssen gemessen werden.

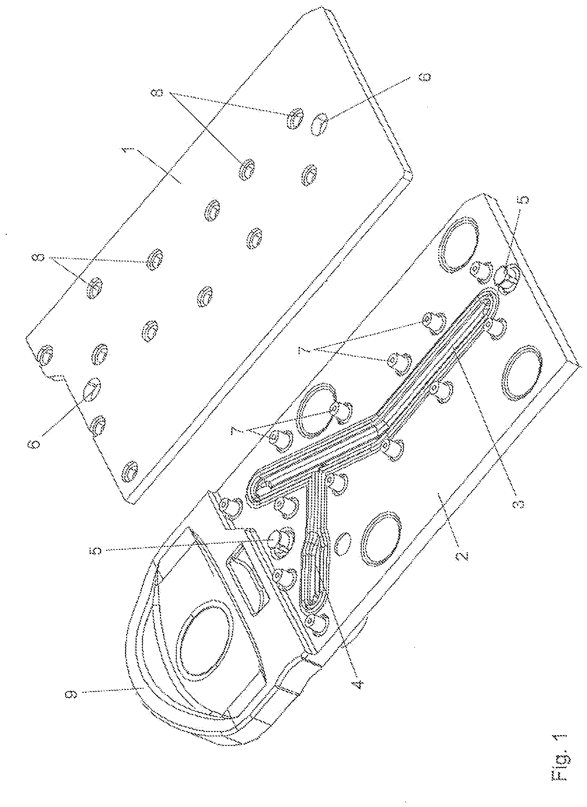

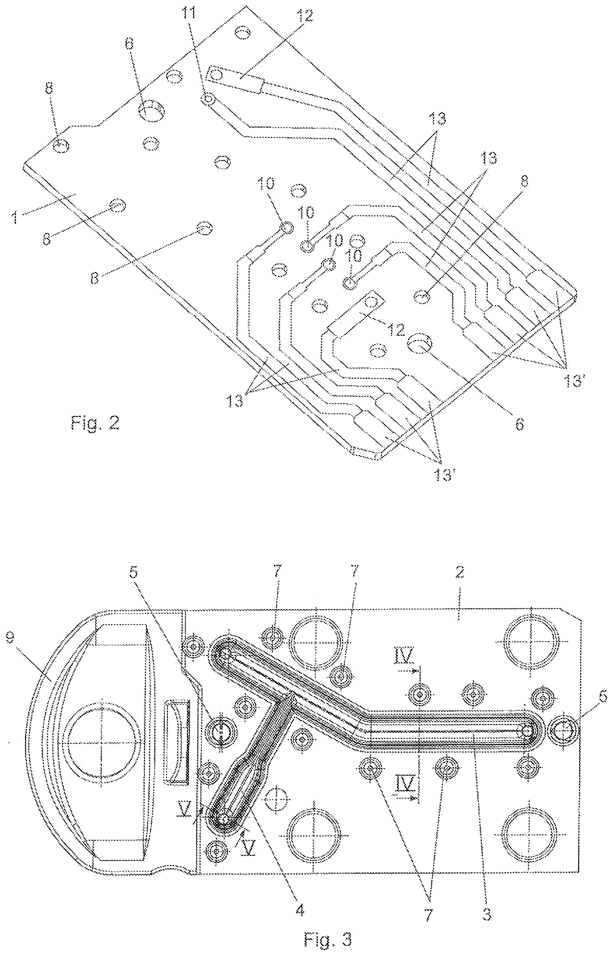

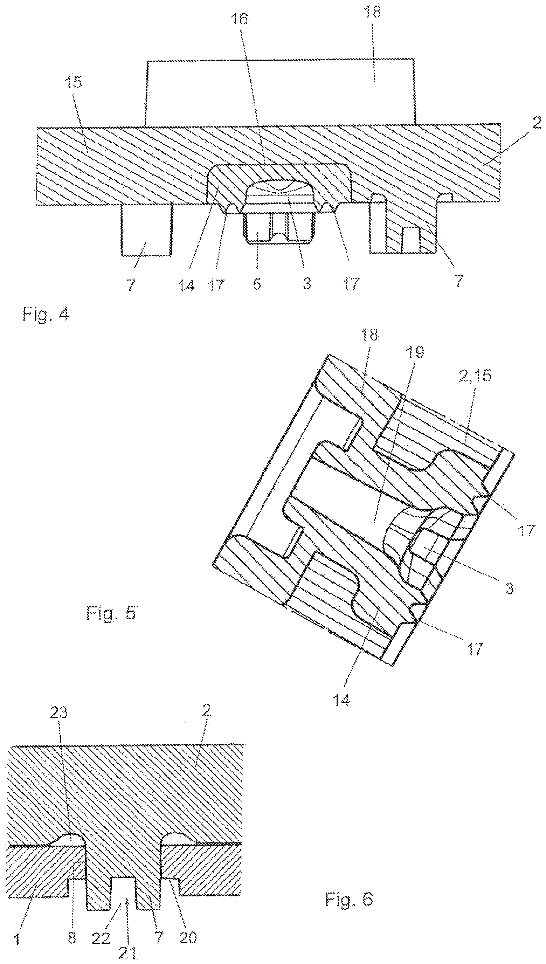

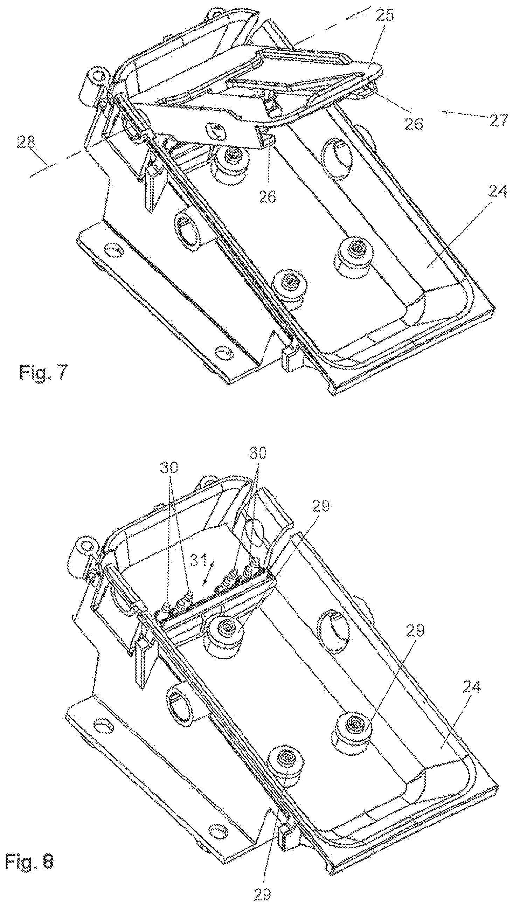

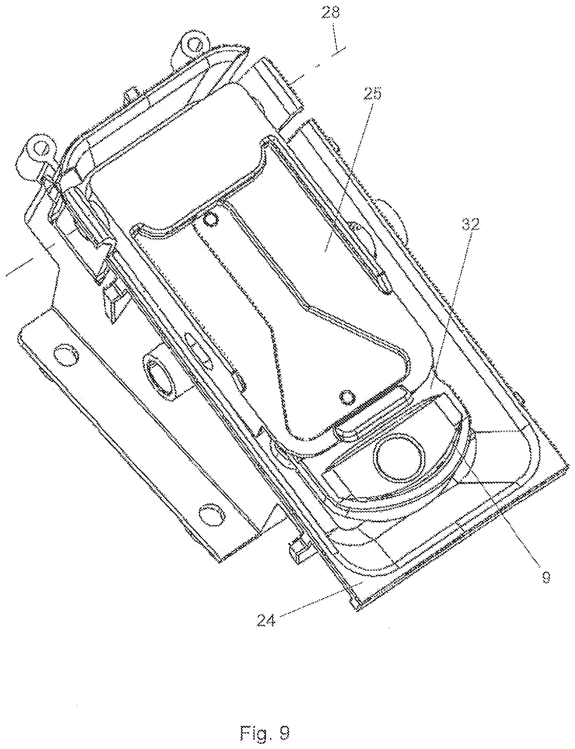

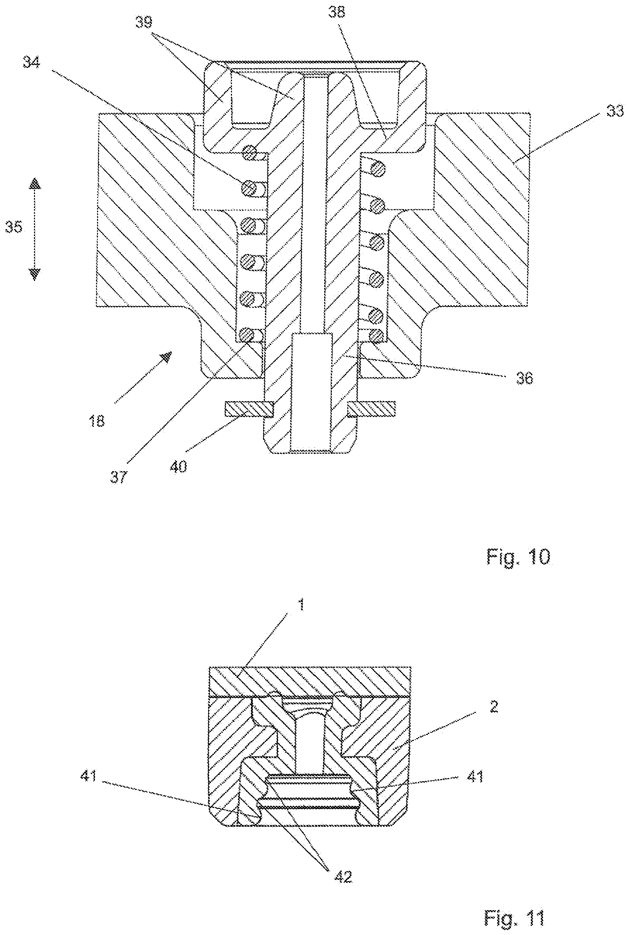

Die Erfindung wird nachfolgend an Hand von in der Zeichnung schematisch dargestellten Ausführungsbeispielen näher erläutert. In dieser zeigen Fig. 1 eine perspektivische Ansicht der Sensorkassette in auseinandergezogener Darstellung, Fig. 2 eine perspektivische Ansicht des Sensorträgers der Sensorkassette, Fig. 3 eine Draufsicht auf den Abdeckteil der Sensorkassette, Fig. 4 eine Schnitansicht gemäß dem Pfeil IV-IV der Fig. 3, Fig. 5 eine Schnittansicht gemäß dem Pfeil V-V der Fig. 3, Fig. 6 eine Detailansicht einer formschlüssigen Verbindung zwischen dem Sensorträger und dem Abdeckteil Fig. 7 eine perspektivische Ansicht des Analysemoduls mit der Kassettenaufnahme in aufgeschwenktem Zustand, Fig. 8 eine Ansicht entsprechend Fig. 7 mit abgenommener Kassettenaufnahme, Fig. 9 eine perspektivische Ansicht des Analysemoduls mit in der Kassettenaufnahme aufgenommener Sensorkassette in angeschlossenem Zustand, Fig. 10 eine Schnittdarstellung eines Verbindungselements und Fig. 11 eine Schnittdarstellung eines Flüssigkeitsanschlusses.

In Fig. 1 ist eine Sensorkassette dargestellt, deren im Wesentlichen planarer Sensorträger mit 1 bezeichnet ist. Die Sensorelemente des Sensorträgers sind an der in Fig. 1 nicht sichtbaren Unterseite angeordnet. Der Sensorträger 1 ist im gebrauchsfertigen bzw. zusammengebauten Zustand der Sensorkassette mit seiner Unterseite auf der Oberseite des Abdeckteils 2 angebracht. In Fig. 1 sind der Sensorträger 1 und der Abdeckteil 2 der Übersichtlichkeit halber jedoch in voneinander beabstandeter Position dargestellt. Im Abdeckteil 2 sind an der dem Sensorträger 1 zugewandten Seite ein Messkanal 3 und ein Referenzkanal 4 ausgebildet.

Zur gegenseitigen Ausrichtung des Sensorträgers 1 und des Abdeckteils 2 trägt der Abdeckteil zwei in Richtung des Sensorträgers 1 vorstehende Ausrichtzapfen 5, welche im zusammengebauten Zustand der Sensorkassette in Ausnehmungen 6 des Sensorträgers 1 eintauchen. Die formschlüssige Verbindung des Sensorträgers 1 mit dem Abdeckteil 2 erfolgt mit Hilfe einer Vielzahl von Verstemmdomen 7, welche Ausnehmungen 8 des Sensorträgers 1 durchsetzen. In Fig. 1 ist weiters ein aus der Ebene des Abdeckteils 2 herausgebogener Griffbereich 9 ersichtlich.

In Fig. 2 ist die Unterseite des Sensorträgers 1 dargestellt. Es ist ersichtlich, dass der Sensorträger eine Mehrzahl von Sensorelementen 10 trägt, die entlang des Messkanals 3 angeordnete ionenselektive Elektroden umfassen, die von der durch den Messkanal 3 fließenden Probenflüssigkeit benetzt werden. Weiters ist eine Referenzelektrode 11 vorgesehen, welche durch die über den. Referenzkanal 4 zugeführte Referenzlösung benetzt wird. Weiters sind Leitwertkontakte 12 vorgesehen. Die ionenselektiven Elektroden der Sensorelemente 10, die Referenzelektrode 11 und die Leitwertkontakte 12 sind über Leiterbahnen 13 mit elektrischen Kontaktbereichen 13' verbunden, über welche ein Spannungsabgriff erfolgt. Die elektrischen Kontaktbereiche 13' sind in einem Randbereich des Sensortragers 1 angeordnet, der im zusammengebauten Zustand der Sensorkassette nicht von dem Abdeckteil 2 abgedeckt ist.

In Fig. 3 sind die Schnittlinien IV-IV und V-V für die in den Fig. 4 und 5 dargestellten Querschnittsdarstellungen ersichtlich. Fig. 4 ist ein Querschnitt des Messkanals 3, wobei ersichtlich ist, dass der Kanal in einer Weichkomponente 14 des Abdeckteils 2 ausgebildet ist. Der restliche Körper des Abdeckteils besteht aus einer Hartkomponente 15. Die Hartkomponente 15 weist eine nutförmige Ausnehmung 16 auf, die dem Verlauf des Messkanals 3 folgt und der Aufnahme der Weichkomponente 14 dient. Eine analoge Ausbildung ist im Zusammenhang mit dem Referenzkanal 4 vorgesehen. Die Weichkomponente 14 bildet hierbei auch Dichtlippen 17 aus, die seitlich des Messkanals 3 aus der Ebene des Abdeckteils 2 in Richtung zum Sensorträger vorstehen.

In Fig. 5 ist der Querschnitt des Abdeckteils 2 im Bereich eines an der Rückseite des Äbdeckteils 2 ausgebildeten Flüssigkeitsanschlusses 18 dargestellt.

Flüssigkeitsanschlüsse sind hierbei an allen drei Enden der Kanäle 3,4 angeordnet. Der in Fig. 5 dargestellte Flüssigkeitsanschluss 18 ist aus der Weichkomponente 14 gebildet und daher sowohl mit dem den Messkanal 3 ausbildenden Material als auch mit den Dichtlippen 17 einstückig ausgebildet. Der Flüssigkeitsanschluss 18 ist über einen in der Weichkomponente 14 ausgebildeten Verbindungskanal 19 mit dem Messkanal 3 verbunden.

Anhand der Fig. 6 wird die Befestigung des Abdeckteils 2 am Sensorträger 1 durch Verstemmen näher erläutert. Der Verstemmdom 7 des Abdeckteils 2 durchsetzt die Ausnehmung 8 des Sensorträgers 1. Die Ausnehmung 8 weist hierbei einen erweiterten Bereich 20 auf, in den das durch den Verstemmprozess bzw. die plastische Verformung verdrängte Material des Verstemmdoms 7 aufgenommen wird. Zu diesem Zweck wird ein Verstemmwerkzeug in Richtung des Pfeils 21 in die stirnseitige Ausnehmung 22 des Verstemmdoms 7 eingeführt und durch Aufbringen einer großen Kraft eine plastische Verformung bewirkt. Um Spannungsspitzen im Bereich des Ansatzes des Verstemmdoms 17 zu reduzieren, ist dort eine Verrundung 23 nach Art eines Axialeinstichs ausgebildet

In Fig. 7 ist ein Änalysemodul 24 dargestellte, welches eine schwenkbar gelagerte Kassettenaufnahme 25 umfasst. Beidseitig an der Kassettenaufnahme 25 angeordnete Führungselemente 26 definieren hierbei einen Bereich, in den die Sensorkassette in Richtung des Pfeils 27 eingeschoben werden kann. Die Schwenkachse der Kassettenaufnahme 25 ist mit 28 bezeichnet.

Die Verbindungselemente des Änalysemoduls, welche die fluidische und elektrische Verbindung der Sensorkassette mit dem Änalysemodul 24 herstellen, sind in Fig. 8 besser ersichtlich, Es sind drei fluidische Verbindungselemente 29 vorgesehen, welche ausgebildet sind, um mit den Flüssigkeitsanschlüssen 18 der Sensorkassette zusammenzuwirken, wobei hier im Wesentlichen eine Steckverbindung hergestellt, wird. Die elektrischen Verbindungselemente sind in Form von Kontaktstiften 30 ausgebildet, welche in Richtung des Doppelpfeils 31 federnd beweglich gehalten sind.

Zum Anschließen einer Sensorkassette 32 an das Analysemodul 24 wird diese in. der in Fig. 7 dargestellten aufgeschwenkten Position der Kassettenaufnahme 25 in Richtung des Pfeils 27 bis zum Anschlag eingeschoben. Danach wird die Kassettenaufnahme 25 samt der Sensorkassette 32 um die Schwenkachse 28 nach unten verschwenkt, bis die Flüssigkeitsanschlüsse 18 in die fluidischen Verbindungselemente 29 und die elektrischen Kontaktbereiche 13' des Sensorträgers 1 gegen die Kontaktstifte 30 gedrückt werden. In dieser in Fig. 9 dargestellten Position wird die Kassettenaufnahme 25 durch nicht näher dargestellte Verriegelungselemente verriegelt, sodass die Sensorkassette 32 in dem: mit dem Analysmodul 24 verbundenen Zustand verbleibt bis die Verriegelung gelöst und die Kassettenaufnahme 25 wieder aufgeschwenkt wird.

In Fig. 10 ist ein fluidisches Verbindungselement 29 gemäß einer bevorzugten Ausführungsform im Schnitt dargestellt. Das Verbindungselement 29 weist einen Führungskörper 33 für einen gegen die Wirkung einer Feder 34 in Richtung des Doppelpfeils 35 federnd gelagerten Anschlussstift 36 auf. Die Feder 34 stützt sich einerseits gegen eine Schulter 37 im Führungskörper 33 und andererseits gegen die Hinterseite der Anschlussplatte 38 des Anschlussstifts 36. Die Anschlussplatte 38 wird von ringförmigen Führungswänden 39 für die Aufnahme eines Flüssigkeitsanschlusses 18 überragt. Ein Sicherungsanschlag ist mit 40 bezeichnet. Der Anschlussstift 36 kann beim Einsetzen einer Sensorkassette federnd einsinken und dadurch eine weitgehend konstante Anpresskraft des fluidischen Verbindungselements 29 gegen den Flüssigkeitsanschluss 18 bereitstellen.

In Fig. 11 ist zu erkennen, dass der Flüssigkeitsanschluss 18 gemäß einer bevorzugten Ausführungsform der vorliegenden Erfindung zur Ausbildung zumindest eines innenliegenden ringförmigen Dichtelements 41 bzw. Dichtrings 41 ausgeformt sein kann. Dies wird durch die Ausbildung von entsprechend geformten Hinterschneidungen 42 der inneren Wand des Flüssigkeitsanschlusses 18 erreicht.

## Patentansprüche

1. In ein Analysemodul einsetzbare Sensorkassette zur Durchführung von insbesondere elektrochemischen Messvorgängen in Probenflüssigkeiten, insbesondere Körperflüssigkeiten oder durch präanalytische Aufbereitung von Körperflüssigkeiten oder biologischem Probenmaterial gewonnenen Probenflüssigkeiten, umfassend einen Sensorträger (1), der im wesentlichen planar ausgebildet ist und eine Mehrzahl von insbesondere elektrochemischen Sensorelementen (10) zur Bestimmung von chemischen und/oder physikalischen Parametern der Probenflüssigkeiten trägt, die mit am Sensorträger (1) ausgebildeten Leiterbahnen in Verbindung stehen, und einen auf dem Sensorträger (1) angeordneten Abdeckteil (2), in dem wenigstens ein zum Sensorträger (1) hin offener nutförmiger Messkanal (3) ausgebildet ist, der für den Durchfluss der Probenflüssigkeit bestimmt ist, mit wenigstens einem insbesondere elektrochemischen Sensorelement (10) des Sensorträgers (1) in Verbindung steht und mit wenigstens einem an der dem Sensorträger (1) abgewandten Seite angeordneten Flüssigkeitsanschluss (18) fluidisch verbunden ist, wobei der Abdeckteil (2) als Zweikomponenten-Spritzgussteil umfassend eine Hartkomponente (15) und eine Weichkomponente (14) ausgeführt ist, wobei der wenigstens eine Messkanal (3) über seine gesamte Länge in der Weichkomponente (14) ausgebildet ist, **dadurch gekennzeichnet, dass** die Weichkomponente (14) den wenigstens einen Flüssigkeitsanschluss (18) ausbildet, der bevorzugt zur Ausbildung zumindest eines innenliegenden ringförmigen Dichtelements (41) ausgeformt ist, wobei der wenigstens eine Messkanal (3) und der wenigstens eine Flüssigkeitsanschluss (18) miteinander einstückig ausgebildet sind.

2. Sensorkassette nach Anspruch 1, **dadurch gekennzeichnet, dass** die Weichkomponente (14) mit dem Sensorträger (1) zusammenwirkende Dichtlippen (17) zur Abdichtung des wenigstens einen Messkanals (3) aufweist.

3. Sensorkassette nach Anspruch 1 oder 2, **dadurch gekennzeichnet, dass** in der Hartkomponente (15) wenigstens eine Nut ausgebildet ist, in der die Weichkomponente (14) zur Ausbildung des wenigstens einen Messkanals (3) angeordnet ist.

4. Sensorkassette nach einem der Ansprüche 1 bis 3, **dadurch gekennzeichnet, dass** der Sensorträger (1) und der Abdeckteil (2) formschlüssig miteinander zusammenwirkende Verbindungselemente (7,8) aufweisen.

5. Sensorkassette nach Anspruch 4, **dadurch gekennzeichnet, dass** die Verbindungselemente (7,8) durch Verstemmen, insbesondere Heiß- und/oder Kaltverstemmen, in formschlüssige Verbindung gebracht sind.

6. Sensorkassette nach Anspruch 4 oder 5, **dadurch gekennzeichnet, dass** die Verbindungselemente (7,8) am Sensorträger (1) oder am Abdeckteil (2) angeordnete Dome (7) umfassen, die am jeweils anderen Teil ausgebildete Ausnehmungen (8) durchsetzen.

7. Sensorkassette nach einem der Ansprüche 1 bis 6, **dadurch gekennzeichnet, dass** zusätzlich zu dem wenigstens einen Messkanal (3) ein Referenzkanal (4) im Abdeckteil (2) ausgebildet ist, wobei der Messkanal (3) an einem Ende mit einem für den Zufluss der Probenflüssigkeit vorgesehenen ersten Flüssigkeitsanschluss (18) und am anderen Ende mit einem für den Abfluss der Probenflüssigkeit vorgesehenen zweiten Flüssigkeitsanschluss (18) in Verbindung steht und wobei der Referenzkanal (4) an einem Ende mit einem für den Zufluss einer Referenzflüssigkeit vorgesehenen dritten Flüssigkeitsanschluss (18) in Verbindung steht und am anderen Ende in den Messkanal (3) mündet.

8. Vorrichtung zur Durchführung von insbesondere elektrochemischen Messvorgängen in Probenflüssigkeiten umfassend eine Sensorkassette (32) nach einem der Ansprüche 1 bis 7 und ein Analysemodul (24) mit wenigstens einer Kassettenaufnahme (25) für die Sensorkassette (32), wobei die Sensorkassette (32) im in der Kassettenaufnahme (25) aufgenommenen Zustand entlang einer Bewegungsbahn zwischen einer ersten und einer zweiten Position verlagerbar ist, wobei die Sensorkassette (32) in der ersten Position von dem Analysemodul (24) fluidisch und elektrisch getrennt und in der zweiten Position fluidisch und elektrisch mit dem Analysemodul (24) verbunden ist.

9. Vorrichtung nach Anspruch 8, **dadurch gekennzeichnet, dass** das Analysemodul (24) wenigstens ein, bevorzugt federnd gelagertes, fluidisches Verbindungselement (29) aufweist, das mit dem wenigstens einen als Gegenelement ausgebildeten Flüssigkeitsanschluss (18) der Sensorkassette (32) in fluidische Verbindung bringbar ist und dass das Analysemodul (24) eine Mehrzahl von elektrischen Kontaktelementen aufweist, die mit von dem Abdeckteil (2) freigelassenen Kontaktbereichen der Leiterbahnen der Sensorkassette (32) in elektrische Verbindung bringbar ist.

10. Vorrichtung nach Anspruch 8 oder 9, **dadurch gekennzeichnet, dass** die fluidische und die elektrische Verbindung durch die Verlagerung der Sensorkassette (32) entlang der Bewegungsbahn herstellbar ist.

11. Vorrichtung nach Anspruch 9 oder 10, **dadurch gekennzeichnet, dass** die elektrischen Kontaktelemente von in Richtung der Bewegung entlang der Bewegungsbahn federnd gehaltenen Kontaktstiften (30) gebildet sind.

12. Vorrichtung nach einem der Ansprüche 8 bis 11, **dadurch gekennzeichnet, dass** die Kassettenaufnahme (25) mit einer Lagerung oder Führung zusammenwirkt, um gemeinsam mit der darin aufgenommenen Sensorkassette (32) entlang der Bewegungsbahn verlagert zu werden, wobei die Kassettenaufnahme (25) bevorzugt schwenkbar gelagert ist, um die Sensorkassette (32) entlang der Bewegungsbahn von der ersten Position in die zweite Position zu verschwenken.

13. Vorrichtung nach einem der Ansprüche 8 bis 12, **dadurch gekennzeichnet, dass** das Analysemodul (24) ein mit der Kassettenaufnahme (25) zusammenwirkendes Verriegelungselement aufweist, um die Kassettenaufnahme (25) in der zweiten Position der Sensorkassette (32) zu fixieren.

14. Vorrichtung nach einem der Ansprüche 8 bis 13, **dadurch gekennzeichnet, dass** die Kassettenaufnahme (25) wenigstens ein Halteelement aufweist, welches einen quer zur Bewegungsbahn wirksamen Anschlag für die Sensorkassette (32) ausbildet, wobei das wenigstens eine Halteelement bevorzugt eine Führung zum Einschieben der Sensorkassette (32) in die Kassettenaufnahme (25) quer zur Bewegungsbahn ausbildet.

15. Vorrichtung nach einem der Ansprüche 8 bis 14, **dadurch gekennzeichnet, dass** das Analysemodul (24) eine elektronische Schaltung zur Verstärkung und/oder analog-digital Wandlung der über die elektrischen Kontaktelemente abgegriffenen Signale aufweist.

## Claims

1. A sensor cassette insertable into an analysis module for carrying out in particular electrochemical measurement processes in sample fluids, in particular body fluids or sample fluids obtained by preanalytical preparation of body fluids or of biological sample material, comprising
a sensor carrier (1) which is essentially planar and carries a plurality of in particular electrochemical sensor elements (10) for determining chemical and/or physical parameters of the sample fluids, which sensor elements (10) are connected to conductor tracks formed on the sensor carrier (1), and
a cover part (2) arranged on the sensor carrier (1), in which at least one groove-shaped measuring channel (3) that opens towards the sensor carrier (1) is formed,
which measuring channel (3)
is intended for the flow of the sample fluid,
is connected to at least one in particular electrochemical sensor element (10) of the sensor carrier (1) and
is fluidly connected to at least one fluid connector (18) arranged on the side facing away from the sensor carrier (1),
wherein the cover part (2) is designed as a two-component injection molded part comprising a hard component (15) and a soft component (14), wherein the at least a measuring channel (3) is formed in the soft component (14) over its entire length,
**characterized in that** the soft component (14) forms the at least one fluid connector (18), which is preferably designed to form at least one internal annular sealing element (41), the at least one measuring channel (3) and the at least one fluid connector (18) being formed in one piece with one another.

2. Sensor cassette according to claim 1, **characterized in that** the soft component (14) comprises sealing lips (17) cooperating with the sensor carrier (1) for sealing the at least one measuring channel (3).

3. Sensor cassette according to claim 1 or 2, **characterized in that** at least one groove is formed in the hard component (15), in which the soft component (14) is arranged to form the at least one measuring channel (3).

4. Sensor cassette according to any one of claims 1 to 3, **characterized in that** the sensor carrier (1) and the cover part (2) have connecting elements (7, 8) that interact with one another in a form-fitting manner.

5. Sensor cassette according to claim 4, **characterized in that** the connecting elements (7, 8) are brought into positive connection by caulking, in particular hot and/or cold caulking.

6. Sensor cassette according to claim 4 or 5, **characterized in that** the connecting elements (7, 8) comprise domes (7) arranged on the sensor carrier (1) or on the cover part (2), which domes penetrate openings (8) formed on the other part.

7. Sensor cassette according to any one of claims 1 to 6, **characterized in that** in addition to the at least one measuring channel (3), a reference channel (4) is formed in the cover part (2), wherein the measuring channel (3) is connected at one end with a first fluid connector (18) provided for the inflow of the sample fluid and at the other end with a second fluid connector (18) provided for the outflow of the sample fluid, and the reference channel (4) at one end is connected to a third fluid connector (18) provided for the inflow of a reference fluid and at the other end leads into the measuring channel (3).

8. Device for carrying out in particular electrochemical measurement processes in sample fluids, comprising a sensor cassette (32) according to any one of claims 1 to 7 and an analysis module (24) having at least one cassette holder (25) for receiving the sensor cassette (32), wherein the sensor cassette (32) in the state received in the cassette holder (25) is movable along a movement path between a first and a second position, wherein the sensor cassette (32) is fluidly and electrically separated from the analysis module (24) in the first position and is fluidly and electrically connected to the analysis module (24) in the second position.

9. Device according to claim 8, **characterized in that** the analysis module (24) comprises at least one, preferably spring-mounted, fluidic connection element (29), which can be brought into fluidic connection with the at least one fluid connector (18) of the sensor cassette (32) designed as a counter-element, and that the analysis module (24) comprises a plurality of electrical contact elements which can be brought into electrical connection with contact regions of the conductor tracks of the sensor cassette (32) which contact regions are left free by the cover part (2).

10. Device according to claim 9 or 10, **characterized in that** the fluidic and the electrical connection can be established by moving the sensor cassette (32) along the movement path.

11. Device according to claim 9 or 10, **characterized in that** the electrical contact elements are formed by contacting pins (30) which are resilient in the direction of movement along the movement path.

12. Device according to any one of claims 8 to 11, **characterized in that** the cassette holder (25) interacts with a bearing or guide in order to be displaced along the movement path together with the sensor cassette (32) received therein, wherein the cassette holder (25) preferably is pivotally mounted in order to pivot the sensor cassette (32) along the movement path from the first position to the second position.

13. Device according to any one of claims 8 to 12, **characterized in that** the analysis module (24) comprises a locking element which interacts with the cassette holder (25) in order to fix the cassette holder (25) in the second position of the sensor cassette (32).

14. Device according to any one of claims 8 to 13, **characterized in that** the cassette holder (25) has at least one holding element which forms a stop for the sensor cassette (32) which is effective transversely to the movement path, wherein the at least one holding element preferably forms a guide for inserting the sensor cassette (32) into the cassette holder (25) transversely to the movement path.

15. Device according to any one of claims 8 to 14, **characterized in that** the analysis module (24) has an electronic circuit for amplification and/or analog-digital conversion of the signals tapped via the electrical contact elements.

## Revendications

1. Cassette de détection pouvant être insérée dans un module d'analyse pour effectuer, en particulier, des mesures électrochimiques dans des échantillons liquides, en particulier des fluides corporels ou des échantillons liquides obtenus par la préparation pré-analytique de fluides corporels ou de matériel d'échantillon biologique, comprenant un support de détecteur (1), qui est de construction sensiblement plane et porte plusieurs éléments de détection (10), en particulier électrochimiques, pour déterminer des paramètres chimiques et/ou physiques des échantillons liquides, qui sont reliés aux pistes conductrices formées sur le support de détecteur (1), et une partie de recouvrement (2) disposé sur le support de détecteur (1), dans lequel est formé au moins un canal de mesure (3) en forme de rainure, ouvert vers le support de détecteur (1), et destiné à l'écoulement de l'échantillon liquide, relié avec au moins un élément de détection (10), en particulier électrochimique, du support de détecteur (1), et relié de manière fluidique à au moins un raccord de liquide (18) disposé sur le côté opposé au support de détecteur (1), la partie de recouvrement (2) étant réalisée sous forme de pièce moulée par injection à deux composants comprenant un composant dur (15) et un composant mou (14), l'au moins un canal de mesure (3) étant réalisé sur toute sa longueur dans le composant mou (14), **caractérisée en ce que** le composant mou (14) constitue l'au moins un raccord de liquide (18), qui est de préférence conformé pour former au moins un élément d'étanchéité annulaire interne (41), l'au moins un canal de mesure (3) et l'au moins un raccord de liquide (18) étant formés d'un seul tenant l'un avec l'autre.

2. Cassette de détection selon la revendication 1, **caractérisée en ce que** le composant mou (14) comporte des lèvres d'étanchéité (17) coopérant avec le support de détecteur (1) pour étancher l'au moins un canal de mesure (3).

3. Cassette de détection selon la revendication 1 ou 2, **caractérisée en ce qu'**au moins une rainure est formée dans le composant dur (15), dans laquelle est disposé le composant mou (14) pour former l'au moins un canal de mesure (3).

4. Cassette de détection selon l'une des revendications 1 à 3, **caractérisée en ce que** le support de détecteur (1) et la partie de recouvrement (2) comprennent des éléments de connexion (7, 8) qui interagissent les uns avec les autres par ajustement de forme.

5. Cassette de détection selon la revendication 4, **caractérisée en ce que** les éléments de connexion (7, 8) sont mis en connexion ajustée par matage, en particulier par matage à chaud et/ou à froid.

6. Cassette de détection selon la revendication 4 ou 5, **caractérisée en ce que** les éléments de connexion (7, 8) comprennent des dômes (7) disposés au support de détecteur (1) ou à la partie de recouvrement (2), qui pénètrent dans des évidements (8) formés sur l'autre partie respectivement.

7. Cassette de détection selon l'une des revendications 1 à 6, **caractérisée en ce que**, en plus de l'au moins un canal de mesure (3), un canal de référence (4) est formé dans la partie de recouvrement (2), le canal de mesure (3) étant relié avec une extrémité à un premier raccord de liquide (18) prévu pour l'entrée de l'échantillon liquide, et avec l'autre extrémité à un deuxième raccord de liquide (18) prévu pour la sortie de l'échantillon liquide, et le canal de référence (4) étant relié avec une extrémité à un troisième raccord de liquide (18) prévu pour l'entrée d'un liquide de référence, et avec l'autre extrémité se déverse dans le canal de mesure (3).

8. Dispositif pour effectuer, en particulier, des mesures électrochimiques dans des échantillons liquides, comprenant une cassette de détection (32) selon l'une des revendications 1 à 7 et un module d'analyse (24) avec au moins un porte-cassette (25) pour la cassette de détection (32), la cassette de détection (32), à l'état reçu dans le porte-cassette (25), étant déplaçable le long d'une trajectoire de déplacement entre une première et une seconde position, la cassette de détection (32) étant séparé fluidiquement et électriquement du module d'analyse (24) dans la première position, et relié fluidiquement et électriquement avec le module d'analyse (24) dans la seconde position.

9. Dispositif selon la revendication 8, **caractérisé en ce que** le module d'analyse (24) comprend au moins un élément de raccordement fluidique (29), de préférence monté élastiquement, qui peut être mis en connexion fluidique avec l'au moins un raccord de liquide (18) de la cassette de détection (32) qui est conçu comme un contre-élément, et **en ce que** le module d'analyse (24) comprend plusieurs éléments de contact électrique, qui peuvent être mis en connexion électrique avec des zones de contact exposées par la partie de recouvrement (2) des pistes conductrices de la cassette de détection (32).

10. Dispositif selon la revendication 8 ou 9, **caractérisé en ce que** les liaisons fluidique et électrique peuvent être établies en déplaçant la cassette de détection (32) le long de la trajectoire de déplacement.

11. Dispositif selon la revendication 9 ou 10, **caractérisé en ce que** les éléments de contact électrique sont formés par des broches de contact (30) maintenues élastiquement dans la direction de déplacement le long de la trajectoire de déplacement.

12. Dispositif selon l'une des revendications 8 à 11, **caractérisé en ce que** le porte-cassette (25) coopère avec un palier ou une glissière, pour être déplacé le long de la trajectoire de déplacement avec la cassette de détection (32) reçue dans celle-ci, le porte-cassette (25) étant de préférence monté pivotant, pour pivoter la cassette de détection (32) le long de la trajectoire de déplacement de la première position à la seconde position.

13. Dispositif selon l'une des revendications 8 à 12, **caractérisé en ce que** le module d'analyse (24) comprend un élément de verrouillage coopérant avec le porte-cassette (25), pour fixer le porte-cassette (25) dans la seconde position de la cassette de détection (32).

14. Dispositif selon l'une des revendications 8 à 13, **caractérisé en ce que** le porte-cassette (25) comprend au moins un élément de retenue, qui forme une butée pour la cassette de détection (32) opérant transversalement à la trajectoire de déplacement, l'au moins un élément de retenue formant de préférence une glissière pour insérer la cassette de détection (32) dans le porte-cassette (25) transversalement à la trajectoire de déplacement.

15. Dispositif selon l'une des revendications 8 à 14, **caractérisé en ce que** le module d'analyse (24) comprend un circuit électronique d'amplification et/ou de conversion analogique-numérique des signaux prélevés via les éléments de contact électrique.
